# FASCICULE DE BREVET EUROPEEN

(11) **EP 4 020 646 B1**
(45) Date de publication et mention de la délivrance du brevet: **24.05.2023**
(21) Numéro de dépôt: 21215618.6
(22) Date de dépôt: 17.12.2021
(51) Int. Cl.: H01M 8/2432, H01M 8/2483, H01M 8/04089, H01M 8/10, H01M 8/1018

(54) **PILE À COMBUSTIBLE A INJECTIONS MULTIPLES DE FABRICATION SIMPLIFIÉE**
BRENNSTOFFZELLE MIT MEHRFACHEINSPRITZUNG UND VEREINFACHTER HERSTELLUNG
MULTIPLE INJECTION FUEL CELL WITH SIMPLIFIED PRODUCTION

(30) Priorité: 22.12.2020 FR 2013924
(43) Date de publication de la demande: 29.06.2022
(73) Titulaire: Commissariat à l'énergie atomique et aux énergies alternatives, 75015 Paris (FR)
(72) Inventeur: POIROT-CROUVEZIER, Jean-Philippe, 38054 GRENOBLE CEDEX 09 (FR)
(74) Mandataire: Brevalex

(56) Documents cités:
- EP-A1- 2 037 526
- WO-A2-2006/118754
- US-A1- 2011 229 784

## Description

### DOMAINE TECHNIQUE ET ÉTAT DE LA TECHNIQUE ANTÉRIEURE

La présente invention se rapporte à une pile à combustible à injections multiples, et plus particulièrement aux piles à combustible fonctionnant à basse température.

Une pile à combustible est un empilement de cellules élémentaires, désigne AME, comprenant chacune une anode, une cathode et un électrolyte interposé entre l'anode et la cathode. Dans les cellules élémentaires a lieu une réaction électrochimique entre deux réactifs qui sont introduits de manière continue. Les cellules élémentaires sont disposées entre deux plaques bipolaires ou collecteurs de courant. Les plaques bipolaires séparent deux cellules élémentaires adjacentes et assurent leur connexion électrique. Des joints sont prévus entre les cellules élémentaires et les plaques bipolaires en périphérie de celles-ci.

Le combustible est apporté au contact de l'anode, le comburant au contact de la cathode. La réaction est subdivisée en deux demi-réactions :
- une oxydation à l'interface anode / électrolyte,
- une réduction à l'interface cathode / électrolyte.

Les réactifs (combustible et comburant) sont apportés à l'anode et à la cathode, et les produits et les espèces non réactives sont être évacués, ainsi que la chaleur produite. Dans les systèmes utilisant de l'hydrogène H₂ et de l'air atmosphérique comme réactifs, l'air est amené à la pile à travers une série de composants, tels qu'un filtre, un échangeur thermique, un humidificateur, etc. avant de pénétrer dans la pile à la cathode. L'hydrogène est apporté à l'anode, celui-ci peut être issu d'un grand nombre de sources différentes. En sortie de pile, plusieurs configurations existent qui dépendent du gaz injecté en entrée de la pile. Soit le gaz injecté dans le système est suffisamment pur et il peut être en partie réinjecté en entrée de la pile de manière à homogénéiser le mélange dans la pile, soit il est simplement purgé à intervalle régulier afin d'évacuer les polluants tout en minimisant la quantité d'hydrogène purgé.

Le document FR 2 975 227 propose un autre type de circulation, dans lequel les cellules de la pile à combustible sont divisées en deux groupes, les deux groupes étant alimentés en hydrogène en alternance au moins pendant une partie du fonctionnement, et les cellules qui ne sont pas alimentées directement, le sont au travers des cellules alimentées et des canaux d'évacuation. Après une certaine durée de fonctionnement, les deux groupes sont alimentés simultanément et le mélange gazeux, qui contient notamment de l'azote, est évacué.

Afin d'alimenter deux groupes de cellules distincts, on peut réaliser physiquement deux empilements de cellules montés d'une part et d'autre d'une plaque de maintien centrale qui comporte des moyens d'alimentation en hydrogène, cependant cette structure est encombrante.

D'autres possibilités existent, mais elles impliquent d'utiliser des joints d'épaisseurs différentes, ce qui augmente le nombre de composants de la pile et complexifie sa fabrication.

### EXPOSÉ DE L'INVENTION

C'est par conséquent un but de la présente invention d'offrir une pile à combustible permettant une alimentation alternée ou simultanée de deux groupes de cellules de réalisation simplifiée.

Le but énoncé ci-dessus est atteint par une pile à combustible comportant un empilement de cellules élémentaires séparées par des plaques bipolaires, des moyens d'alimentation en au moins un premier réactif aux cellules comportant un premier collecteur d'alimentation en un premier réactif et un deuxième collecteur d'alimentation en un deuxième réactif, et des moyens d'évacuation des sous-produits de réaction, au moins ledit premier collecteur d'alimentation comportant deux extrémités configurées pour être connectées à une source du premier réactif et ledit premier collecteur étant divisé en deux portions, chaque portion étant reliée fluidiquement à des compartiments anodiques ou cathodiques, la division du premier collecteur étant obtenue par une paroi formée soit par un film étanche aux gaz inséré entre une cellule et une plaque bipolaire, soit directement par une partie d'une cellule élémentaire

Dans le mode de réalisation où la paroi est formée par un film, celui-ci étant très fin, il s'insère entre les éléments existants de la pile à combustible et ne requiert pas de modifier les dimensions des éléments existants.

Dans le mode de réalisation où la paroi est formée par une partie de la cellule élémentaire, la cellule étant déjà insérée entre les joints, il n'y aucune modification des dimensions des éléments existants, c'est uniquement la structure de la cellule au niveau d'au moins l'un des collecteurs d'alimentation qui est modifiée.

En alimentant alternativement l'une et l'autre des extrémités du premier collecteur et donc l'une et l'autre des portions du premier collecteur, les cellules connectées fluidiquement audites portions sont alimentées alternativement. En alimentant simultanément l'une et l'autre des extrémités du collecteur et donc l'une et l'autre des portions du collecteur, les cellules connectées fluidiquement audites portions sont alimentées simultanément.

Avantageusement, un ou plusieurs renforts mécaniques est ou sont prévu(s) à proximité ou au contact de la paroi pour améliorer sa tenue mécanique à une différence de pression trop élevée entre les deux portions du premier collecteur.

En d'autres termes, une paroi est prévue dans le ou les collecteurs d'alimentation en réactif au contact de ou au sein d'une cellule élémentaire pour diviser de manière étanche les cellules en deux groupes, qui peuvent ainsi être alimentés de manière indépendante. Cette paroi ne requiert pas de modifications des dimensions des éléments existants de l'empilement.

L'un des objets de la présente demande est une pile à combustible comportant un empilement de cellules élémentaires séparées par des plaques bipolaires, chaque cellule élémentaire comportant une anode, une cathode et un électrolyte entre l'anode et la cathode, et définissant avec une plaque bipolaire du côté de l'anode un compartiment anodique et du côté de la cathode un compartiment cathodique, un premier collecteur d'alimentation des compartiments anodiques en un premier réactif, un deuxième collecteur d'alimentation des compartiments cathodiques en un deuxième réactif, et au moins un collecteur d'évacuation des sous-produits de réaction. Ledit premier collecteur d'alimentation comporte deux extrémités configurées pour être connectées à une source du premier réactif. Ledit premier collecteur d'alimentation est divisé en deux portions par une première paroi étanche au premier réactif, chaque portion étant reliée fluidiquement à des compartiments anodiques par des connexions fluidiques, ladite première paroi comportant un premier film inséré entre une cellule et une plaque bipolaire ou étant formée par une partie périphérique d'une cellule élémentaire. Et/ou le deuxième collecteur d'alimentation comporte deux extrémités configurées pour être connectées à une source du deuxième réactif. Ledit deuxième collecteur d'alimentation est divisé en deux portions par une paroi étanche au deuxième réactif, chaque portion étant reliée fluidiquement à des compartiments cathodiques par des connexions fluidiques, ladite deuxième paroi comportant un deuxième film inséré entre une cellule et une plaque bipolaire ou étant formée par une partie périphérique d'une cellule élémentaire, et ladite pile comporte des moyens de commande configurées pour commander séparément l'alimentation des première et deuxième extrémités du premier et/ou deuxième collecteur d'alimentation.

De préférence, la première paroi est disposée dans l'empilement de sorte que chaque portion soit reliée fluidiquement au même nombre de compartiments anodiques par des connexions fluidiques et/ou la deuxième paroi est disposée dans l'empilement de sorte que chaque portion soit reliée fluidiquement au même nombre de compartiments cathodiques par des connexions fluidiques.

Par exemple, le premier film et/ou le deuxième film a ou ont une épaisseur comprise entre quelques micromètres et quelques dizaines de micromètres.

Le premier film et/ou le deuxième film peut comporter un matériau choisi parmi le polyéthylène naphtalate (PEN), le polyéthylène téréphtalate (PET) et le polyimide.

Dans un mode de réalisation, le premier film est inséré entre un joint et une cellule élémentaire et en contact avec ledit joint et la cellule élémentaire, et/ou le deuxième film est inséré entre un joint et une cellule élémentaire et en contact avec ledit joint et la cellule élémentaire.

Dans un autre mode de réalisation, ladite cellule élémentaire comporte un électrolyte sous forme de membrane et la partie périphérique est formée par une partie périphérique de la membrane.

Par exemple, la partie périphérique de la membrane est recouverte sur au moins une de ses faces par un troisième film.

Dans un autre mode de réalisation, ladite cellule élémentaire comporte un électrolyte entre l'anode et la cathode et une partie périphérique rapportée sur l'électrolyte, ladite partie périphérique étant formée par au moins un quatrième film. Le quatrième film peut être soit un renfort périphérique sous forme de « film » (sans ouverture de collecteur), soit un renfort périphérique troué, et rebouché par un film, soit un renfort périphérique moulé sur l'électrolyte, troué et rebouché par un film, ou non.

Le troisième film ou le quatrième film comporte un matériau choisi parmi le polyéthylène naphtalate (PEN), le polyéthylène téréphtalate (PET) et le polyimide.

Les plaques bipolaires peuvent avantageusement comporter deux plaques superposées et les connexions fluidiques entre les collecteurs et les compartiments anodiques et cathodiques peuvent être réalisées au moins en partie entre lesdites plaques.

Selon une caractéristique additionnelle, la pile à combustible comporte des premiers moyens de renfort de la première paroi afin qu'elle résiste à une différence de pression entre les deux portions du premier collecteur d'alimentation et/ou des deuxièmes moyens de renfort de la deuxième paroi afin qu'elle résiste à une différence de pression entre les deux portions du deuxième collecteur.

Les premiers moyens de renfort peuvent comporter une plaquette disposée dans l'une des portions du premier collecteur d'alimentation et une plaquette disposée dans l'autre portion du premier collecteur d'alimentation, chaque plaquette étant disposée entre une face de la première paroi et la plaque bipolaire la plus proche à proximité de la première paroi, et/ou les deuxièmes moyens de renfort comportent une plaquette disposée dans l'une des portions du deuxième collecteur et une plaquette disposée dans l'autre portion du deuxième collecteur, chaque plaquette étant disposée entre une face de la deuxième paroi et la plaque bipolaire la plus proche à proximité de la deuxième paroi.

Par exemple, lesdites plaquettes sont fixées à la plaque bipolaire ou à la face de la paroi. Lesdites plaquettes peuvent être fabriquées à partir d'un feuillard métallique.

Dans un exemple particulier, la source en un premier réactif est une source d'hydrogène et le deuxième collecteur est connecté à une source d'air.

Avantageusement, lesdits moyens de commande sont configurés pour, dans une phase alimenter alternativement chacune des portions du premier collecteur et/ou du deuxième collecteur et maintenir fermé le collecteur de sortie, et dans une autre phase alimenter les deux portions du premier collecteur simultanément et/ou du deuxième collecteur simultanément et d'ouvrir le collecteur de sortie.

Un autre objet de la présente demande est un procédé de fabrication d'une pile à combustible à n + m cellules élémentaires selon l'invention comportant :
- fabrication des n + m + 1 plaques bipolaires,
- fabrication des n + m cellules élémentaires,
- empilement des plaques bipolaires et des cellules élémentaires en alternant les plaques bipolaires et les cellules élémentaires et en interposant des joints entre une plaque bipolaire et une cellule élémentaire, de sorte à délimiter les compartiments cathodiques et anodiques, le premier collecteur, le deuxième collecteur et le au moins un collecteur d'évacuation,
- mise en place d'un premier film entre un joint et une cellule élémentaire sur une fenêtre du premier collecteur d'alimentation et/ou d'un deuxième film entre un joint et une cellule élémentaire sur une fenêtre du deuxième collecteur d'alimentation au cours de l'empilement, de sorte qu'à la fin de l'empilement le premier collecteur d'alimentation et/ou le deuxième collecteur d'alimentation soient séparés en deux portions, l'une des portions étant raccordée fluidiquement à n compartiments et l'autre portion étant raccordée fluidiquement à m compartiments

Un autre objet de la présente demande est un procédé de fabrication d'une pile à combustible à n + m cellules élémentaires selon l'invention, comportant :
- fabrication des n + m + 1 plaques bipolaires,
- fabrication des n + m cellules élémentaires, ladite comprenant la réalisation d'ouvertures dans une partie périphérique des cellules élémentaires pour délimiter le premier collecteur d'alimentation, le deuxième collecteur et le au moins un collecteur d'évacuation, une cellule parmi les n + m ne comportant pas d'ouverture pour le premier collecteur d'alimentation et/ou deuxième collecteur d'alimentation,
- empilement des plaques bipolaires et des cellules élémentaires en alternant les plaques bipolaires et les cellules élémentaires et en interposant des joints entre une plaque bipolaire et une cellule élémentaire, de sorte à délimiter les compartiments cathodiques et anodiques, le premier collecteur, le deuxième collecteur et le au moins un collecteur d'évacuation, ladite cellule ne comportant pas d'ouverture pour le premier collecteur d'alimentation et/ou le deuxième collecteur d'alimentation étant disposé dans l'empilement, de sorte qu'à la fin de l'empilement le premier collecteur d'alimentation et/ou le deuxième collecteur d'alimentation soient séparés en deux portions, l'une des portions étant raccordée fluidiquement à n compartiments et l'autre portion étant raccordée fluidiquement à m compartiments

Avantageusement, n est égal à m.

### BRÈVE DESCRIPTION DES DESSINS

La présente invention sera mieux comprise sur la base de la description qui va suivre et des dessins en annexe sur lesquels:
[Fig. 1] est un exemple de représentation schématique d'un exemple de pile à combustible selon un premier mode de réalisation selon l'invention.
[Fig. 2] exemple de représentation schématique partielle d'un autre exemple de pile à combustible selon le premier mode de réalisation selon l'invention.
[Fig. 3] est un exemple de représentation schématique d'un exemple de pile à combustible selon un deuxième mode de réalisation selon l'invention.
[Fig. 4] est un autre exemple de représentation schématique d'un exemple de pile à combustible selon le deuxième mode de réalisation selon l'invention.
[Fig. 5] est un autre exemple de représentation schématique d'un exemple de pile à combustible selon le deuxième mode de réalisation selon l'invention.

### EXPOSÉ DÉTAILLÉ DE MODES DE RÉALISATION PARTICULIERS

La présente invention sera décrite dans le cas d'une pile à combustible alimentée du côté de l'anode par de l'hydrogène et du côté de la cathode par de l'air, la mise en oeuvre des moyens d'alimentation alternés étant appliquée ici à l'hydrogène, c'est-à-dire à l'alimentation des anodes. L'invention est applicable également à l'alimentation de la cathode, c'est-dire pour l'alimentation en comburant. Mais il sera compris que l'invention s'applique aux piles à combustible utilisant d'autres produits réactifs, et l'alimentation alternée peut s'appliquer du côté de l'alimentation en comburant et/ou du côté de l'alimentation en combustible.

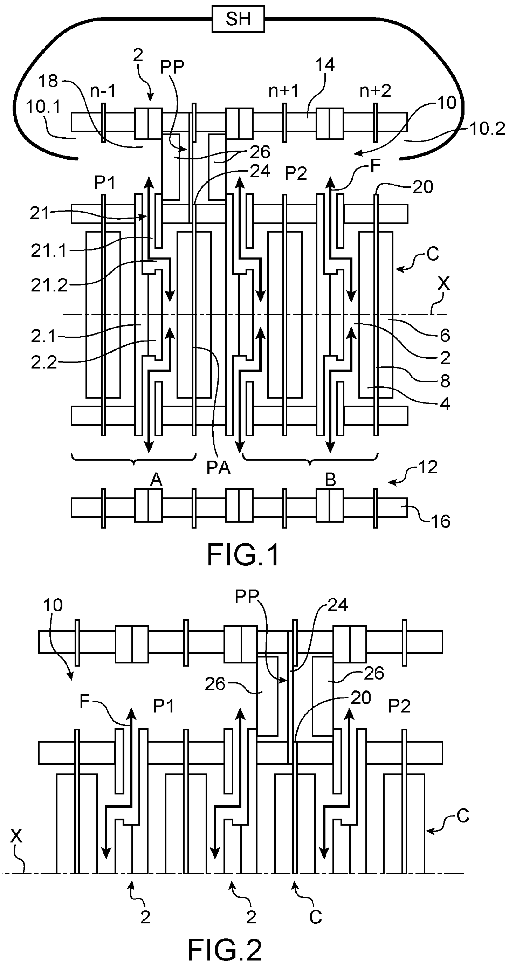

Sur la figure 1, on peut voir une représentation schématique d'un exemple de pile à combustible selon un premier mode de réalisation selon l'invention.

La pile à combustible comporte une pluralité de cellules élémentaires désignées C séparées deux à deux par des plaques bipolaires 2. Chaque cellule élémentaire C comporte une anode 4, une cathode 6 et un électrolyte 8 interposé entre l'anode 4 et la cathode 6 et assurant la conduction ionique entre l'anode et la cathode. L'électrolyte 8 est par exemple formé par une membrane.

Dans une pile à combustible de type PEMFC (*Proton exchange membrane fuel cells*), l'électrolyte est formé par une membrane polymère conductrice ionique et étanche au gaz. La partie de la membrane en regard de l'anode et de la cathode sera désignée « partie active » PA et la partie de la membrane entourant la partie active sera désigné « partie périphérique » PP. La partie périphérique PP forme également une partie périphérique de la cellule élémentaire.

Les cellules C et les plaques bipolaires 2 sont empilées et de préférence serrées l'une contre l'autre le long d'un axe X. Les plaques bipolaires 2 et les cellules C ont par exemple des formes circulaires, carrées ou rectangulaires. Par exemple, une pile à combustible comporte entre 2 et 1000 cellules élémentaires.

Chaque cellule élémentaire C délimite avec une plaque bipolaire adjacente du côté de l'anode, un compartiment anodique, et avec une autre plaque bipolaire adjacente du côté de la cathode un compartiment cathodique.

La pile comporte également des moyens d'alimentation et de distribution de l'hydrogène dans les compartiments anodiques. Les moyens d'alimentation et de distribution comportent un collecteur d'admission d'hydrogène 10.

La pile comporte également des moyens d'alimentation et de distribution de l'air dans les compartiments cathodiques. Les moyens d'alimentation et de distribution d'air comportent un collecteur d'admission d'air (non représenté).

La pile comporte également des moyens de collecte des gaz à évacuer comportant un collecteur d'évacuation ou de sortie 12 connecté aux compartiments anodiques, et un collecteur d'évacuation (non représenté) connecté aux compartiments cathodiques.

Le collecteur d'alimentation en hydrogène 10 est défini par des fenêtres 18 formées dans les plaques bipolaires 2 et des fenêtres 20 formées dans les cellules élémentaires C, plus particulièrement dans l'électrolyte 8. Les collecteurs d'alimentation en air et de sortie sont également formés par des fenêtres dans les cellules et les plaques bipolaires.

La pile comporte un joint périphérique (non représenté) intercalé entre les cellules C et les plaques bipolaires 2 pour délimiter de manière étanche les compartiments anodiques et cathodiques. La pile comporte également des joints 14 intercalés entre les cellules C et les plaques bipolaires 2 et bordant les fenêtres 18, 20 pour délimiter le collecteur d'alimentation en hydrogène 10, des joints intercalés entre les cellules C et les plaques bipolaires 2 bordant les fenêtres pour délimiter le collecteur d'alimentation en air, et des joints 16 intercalés entre les cellules C et les plaques bipolaires 2 et bordant les fenêtres pour délimiter le collecteur d'évacuation. Le matériau des joints est par exemple choisi parmi les polymères, par exemple le silicone, le polymère d'éthylène-propylène-diène ou EPDM, les fluoroélastomères tels que ceux à base de carbone (FKM) des composites métal-polymères, par exemple comportant une tôle métallique emboutie revêtue d'un film de FKM.

Dans cet exemple et de manière non limitative les collecteurs s'étendent selon des axes parallèles à l'axe X.

La connexion fluidique entre le collecteur d'alimentation en hydrogène et chaque compartiment cathodique comporte un canal 21 réalisé dans la plaque bipolaire. Dans l'exemple représenté, chaque plaque bipolaire 2 comporte deux demi-plaques bipolaires 2.1, 2.2, l'une définissant un compartiment anodique et l'autre définissant un compartiment cathodique adjacent. Dans cet exemple, le canal 21 comporte une partie transversale 21.1 formée en partie dans la demi-plaque 2.1 et en partie dans la demi-plaque 2.2 et une partie axiale 21.2 formée dans la demi-plaque 2.2. En variante le canal 21 est réalisé entièrement dans la demi-plaque 2.2. De préférence, un circuit de refroidissement (non représenté) est prévu dans chaque plaque collectrice. Dans cet exemple le circuit est situé à l'intérieur de chaque plaque bipolaire, formé dans l'une ou l'autre des demi-plaques, ou dans les deux. En variante, les plaques bipolaires sont d'un seul tenant et le canal 21 est usiné dans la plaque bipolaire.

La pile comporte des moyens séparant de manière étanche en deux portions P1, P2 le collecteur d'alimentation en hydrogène. Selon la premier mode de réalisation, les moyens comportent un film 24 en matériau étanche divisant le collecteur 10 en deux portions et s'étendant sur toute la section transversale du collecteur. Le film 24 est interposé entre une cellule élémentaire C et un joint 14. Le film 24 obture la fenêtre 20 formée dans la cellule élémentaire C. Le film 24 est de préférence collé sur la membrane. En variant, il peut être uniquement plaqué sur celle-ci en particulier si le matériau du film est suffisamment mou.

Le film 24 est disposé dans l'empilement de sorte que les deux portions P1, P2 alimentent préférentiellement le même nombre de compartiments anodiques. La portion P1 alimente le groupe de cellules A et la portion P2 alimente le groupe de cellules B. Chaque portion P1, P2 alimente deux compartiments anodiques. Sur la figure 1, la flèche d'alimentation du compartiment n-1 n'est pas représentée.

Le film 24 a une épaisseur faible, par exemple comprise entre quelques micromètres et quelques dizaines de micromètres. L'épaisseur du film 24 est suffisamment faible pour être absorbée par la déformation du joint qui peut supporter une surcompression. Les joints ont par exemple une épaisseur comprise entre 0,2 mm et 1 mm. Il n'est donc pas nécessaire de modifier les joints pour intégrer cette séparation étanche. Le film est par exemple en polyéthylène naphtalate (PEN), en polyéthylène téréphtalate (PET), en polyimide, par exemple en Kapton^{®}.

En outre le collecteur d'alimentation 10 en hydrogène est configuré pour être connecté au niveau de ses deux extrémités 10.1, 10.2 à une source d'hydrogène SH, des moyens (non représentés) sont prévus pour commander séparément la connexion de chacune des extrémités 10.1, 10.2 à la source d'hydrogène SH.

Les flèches F symbolisent la circulation de l'hydrogène.

Le différentiel de pression entre les deux portions P1, P2 de collecteur de part et d'autre du film 24 est de l'ordre de quelques dizaines de millibars à quelques centaines de millibars. La pile à combustible comporte de manière très avantageuse des moyens de renfort mécanique du film mince et lui permettre de supporter la différence de pression sans se déchirer.

Les moyens de renfort comportent dans l'exemple représenté deux plaquettes 26 disposées de part et d'autre du film 24 et limitant l'effet de la différence pression sur le film. Chaque plaquette 26 est disposée entre le film 24 et une plaque bipolaire 2. Lorsqu'un écart de pression entre les deux portions P1, P2 apparaît, le film 24 se déforme et vient se plaquer contre l'une des plaquettes 26. Cette dernière est peu déformable à ces niveaux de pression, elle limite la déformation du film, et empêche que celui-ci se déchire.

Les plaquettes 26 peuvent être pleines ou ajourées. Elles peuvent être montées libres de se déplacer dans l'espace entre le film et la plaque bipolaire ou être fixées par exemple par soudage à la plaque bipolaire, plus particulièrement au contour de la fenêtre réalisée dans la plaque bipolaire ou être collées sur le film.

Les plaquettes 26 sont par exemple fabriquées dans un feuillard métallique.

La mise en oeuvre d'un film et de renforts métalliques séparés permet d'utiliser un film dont l'épaisseur permet de ne pas modifier les joints de la pile.

En variante, le film mince 24 est suffisamment résistant pour supporter le différentiel de de pression, par exemple le film est renforcé, notamment à l'endroit du collecteur, par exemple, le film est polyéthylène renforcé fibre de verre. Le film reste suffisamment mince pour pouvoir être pincé entre deux joints sans avoir à modifier ceux-ci.

Sur la figure 2, on peut voir un autre exemple de pile à combustible selon le premier mode de réalisation, le film mince 24 sépare en deux portions P1 et P2, le collecteur d'alimentation, chaque portion alimentation deux compartiments anodiques.

Le fonctionnement de la pile à combustible va maintenant être décrit.

Dans une phase de fonctionnement, seule la portion P1 est connectée à la source d'hydrogène SH, par exemple en commandant des vannes pour qu'elles permettent l'écoulement de l'hydrogène vers la portion P1 et empêchent la circulation dans la portion P2, les cellules du groupe A sont donc directement alimentées en hydrogène. L'hydrogène parvient aux cellules du groupe B par l'intermédiaire du collecteur de sortie 12, qui est commun aux deux groupes A et B. L'eau liquide parvenant aux anodes des cellules du groupe A est évacuée dans le collecteur de sortie sous l'effet du flux d'hydrogène allant vers le groupe B, qui lui emmène de la vapeur d'eau. L'azote parvenant aux anodes depuis la cathode dans les cellules des groupes A et B, s'accumule dans les cellules du groupe B. L'eau liquide provenant de la cathode et parvenant aux anodes des cellules du groupe B s'accumule également, de même qu'une partie de la vapeur d'eau venant du groupe A, qui se condense. Le collecteur de sortie est obturé par exemple par une vanne qui est fermée.

Dans une phase de fonctionnement suivante, l'alimentation de la portion P1 est interrompue, et c'est au tour de la portion P2 d'être connectée directement à la source d'hydrogène SH, Les cellules du groupe B sont alors directement alimentées. Les cellules du groupe A sont alimentées en hydrogène via les cellules du groupe B et du collecteur d'évacuation. L'azote et l'eau s'accumulent dans les cellules du groupe A. La vanne du collecteur de sortie reste fermée.

Les deux phases sont appliquées en alternance, par exemple en commutant alternativement les électrovannes. Après un certain temps de fonctionnement, l'azote accumulé dans le circuit doit être évacué.

Lors d'une phase suivante, les deux vannes sont ouvertes pour alimenter simultanément directement en hydrogène les cellules des deux groupes A et B. Le mélange gazeux est évacué par le collecteur de sortie 12 suite à l'ouverture de la vanne du collecteur de sortie.

Lors des trois phases de fonctionnement, toutes les cellules sont alimentées en air.

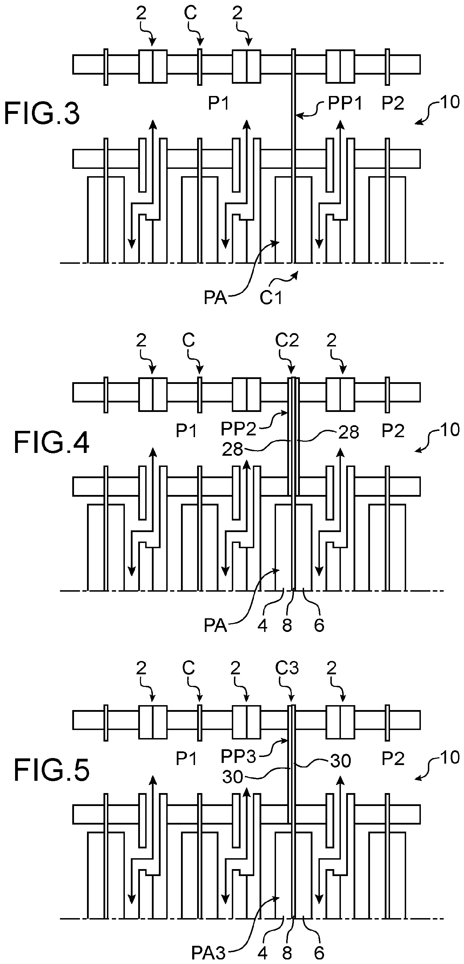

Sur les figures 3 à 5, on peut voir représentés des exemples de piles à combustible selon un deuxième mode de réalisation.

Dans ce deuxième mode de réalisation, la paroi séparant en deux portions le collecteur d'alimentation 10 est formée par une partie d'une cellule élémentaire, plus particulièrement par la membrane formant l'électrolyte ou une extension de celle-ci.

Sur la figure 3, la pile comporte une cellule élémentaire C1 dont la partie périphérique PP1 de la membrane ne comporte pas d'ouverture 20 en regard du collecteur d'alimentation 10. Ainsi c'est directement la membrane qui forme la paroi. Lors du procédé de fabrication, une cellule élémentaire C1 n'est pas découpée ou n'est pas moulée de sorte à comporter cette ouverture. Alternativement toutes les cellules sont découpées ou moulées pour former les ouvertures pour délimiter les différents collecteurs et l'une des ouvertures de l'une C1 des cellules élémentaires est obturée par exemple au moyen d'un ou plusieurs films collés sur la membrane.

Sur la figure 4, la pile comporte au moins une cellule élémentaire C2 dont la partie périphérique PP2 de la membrane est recouverte d'un ou plusieurs films 28 sur l'une ou les deux faces formant un renfort mécanique. Le matériau du ou des films 28 est choisi par exemple parmi le polyéthylène naphtalate (PEN), le polyéthylène téréphtalate (PET) et le polyimide.

La partie périphérique ne comporte pas d'ouverture 20 pour délimiter le collecteur d'alimentation, ou alternativement l'ouverture 20 est obturée par un ou plusieurs films collés.

Toutes les cellules élémentaires de la pile peuvent comporter une membrane dont la partie périphérique est recouverte d'un ou plusieurs films.

Sur la figure 5, la pile comporte au moins une cellule élémentaire C3 dont la membrane comporte une partie active PA3 en un ou plusieurs matériaux assurant la conductions des ions et l'étanchéité aux gaz entre l'anode et la cathode et une partie périphérique PP3 rapportée sur le contour de la partie active PA3 assurant le maintien mécanique et l'étanchéité au gaz. La partie périphérique PP3 comporte un ou des films 30 par exemple collés sur le contour de la partie active. Le matériau du ou des films est choisi par exemple parmi le polyéthylène naphtalate (PEN), le polyéthylène téréphtalate (PET) et le polyimide.

Alternativement La partie périphérique PP3 comporte une zone plane de renfort moulée sur la périphérie de la cellule. De par sa géométrie plate le renfort périphérique moulé est assimilé à un « film » dans la suite de la description. La zone plane de renfort moulée peut comporter une ouverture 20 obturée par un ou plusieurs films collés.

La partie périphérique PP3 ne comporte pas d'ouverture 20 pour délimiter le collecteur d'alimentation, ou alternativement l'ouverture 20 est obturée par un ou plusieurs films collés.

Toutes les cellules élémentaires de la pile peuvent comporter une membrane dont la partie périphérique est composée d'un ou plusieurs films ou une zone plane de renfort moulée.

Pour les piles des figures 3 à 5, les cellules élémentaires C1, C2, C3 sont avantageusement disposées dans l'empilement de sorte que la paroi divise le collecteur d'alimentation 10 en deux portions P1, P2 connectées fluidiquement chacune au même nombre de compartiments anodiques.

Les moyens de renfort mis en oeuvre dans le premier mode de réalisation avec les plaquettes 26 peuvent être appliqués aux piles à combustible selon le deuxième mode de réalisation.

La description des moyens pour diviser les compartiments anodiques en deux groupes et pouvoir les alimenter séparément peut s'appliquer aux compartiments cathodiques si de tels moyens sont mis en oeuvre.

Un exemple de procédé de fabrication de la pile de la figure 1 va maintenant être décrit.

A partir de plaques pleines, des plaques bipolaires 2 sont fabriquées en réalisant des fenêtres, par exemple par découpage, pour réaliser les collecteurs d'alimentation et d'évacuation et en réalisant des portions de canaux, par exemple par usinage, pour alimenter les compartiments anodique et cathodiques.

Les cellules élémentaires sont également structurées en réalisant des fenêtres pour les différents collecteurs.

Les plaques bipolaires et les cellules élémentaires sont superposées en alignant les fenêtres, et en interposant entre une cellule élémentaire et une plaque bipolaire les joints requis pour délimiter les compartiments anodiques et cathodiques et les collecteurs. Un film 24 est interposé entre un joint et une cellule élémentaire sur une fenêtre du collecteur d'alimentation en hydrogène au cours de l'empilement, de sorte qu'à la fin de l'empilement le collecteur d'alimentation en hydrogène soit séparé en deux portions raccordées fluidiquement chacune au même nombre de compartiments anodiques.

Un effort de serrage est ensuite de préférence appliqué dans la direction axiale de l'empilement, par exemple au moyen de tirants.

Les deux extrémités du collecteur d'alimentation en hydrogène sont connectées à une source d'hydrogène, des vannes commandées sont prévues entre la source d'hydrogène et les deux extrémités.

Le collecteur d'alimentation en air est connecté à une source d'air.

Le collecteur d'évacuation est connecté à une zone d'évacuation via une vanne commandée.

Dans le cas des piles à combustible selon le deuxième mode de réalisation, soit la partie périphérique de la cellule n'est pas structurée pour comporter une ouverture 20, soit cette ouverture est obturée par exemple en collant un ou plusieurs films.

## Revendications

1. Pile à combustible comportant un empilement de cellules élémentaires (C) séparées par des plaques bipolaires (2), chaque cellule élémentaire (C) comportant une anode (4) , une cathode (6) et un électrolyte (8) entre l'anode (4) et la cathode (6), et définissant avec une plaque bipolaire (2) du côté de l'anode (4) un compartiment anodique et du côté de la cathode (6) un compartiment cathodique, un premier collecteur d'alimentation (10) des compartiments anodiques en un premier réactif, un deuxième collecteur d'alimentation des compartiments cathodiques en un deuxième réactif, et au moins un collecteur d'évacuation (12) des sous-produits de réaction, dans laquelle ledit premier collecteur d'alimentation (10) comporte deux extrémités (10.1, 10.2) configurées pour être connectées à une source du premier réactif, dans laquelle ledit premier collecteur d'alimentation (10) est divisé en deux portions (P1, P2) par une première paroi étanche au premier réactif, chaque portion (P1, P2) étant reliée fluidiquement à des compartiments anodiques par des connexions fluidiques, ladite première paroi comportant un premier film (24) inséré entre une cellule (C) et une plaque bipolaire (2) ou étant formée par une partie périphérique d'une cellule élémentaire, et/ou dans laquelle le deuxième collecteur d'alimentation comporte deux extrémités configurées pour être connectées à une source du deuxième réactif, dans laquelle ledit deuxième collecteur d'alimentation est divisé en deux portions par une paroi étanche au deuxième réactif, chaque portion étant reliée fluidiquement à des compartiments cathodiques par des connexions fluidiques, ladite deuxième paroi comportant un deuxième film inséré entre une cellule (C) et une plaque bipolaire (2) ou étant formée par une partie périphérique d'une cellule élémentaire, et dans laquelle ladite pile comporte des moyens de commande configurées pour commander séparément l'alimentation des première et deuxième extrémités du premier et/ou deuxième collecteur d'alimentation.

2. Pile à combustible selon la revendication 1, dans laquelle la première paroi est disposée dans l'empilement de sorte que chaque portion (P1, P2) soit reliée fluidiquement au même nombre de compartiments anodiques par des connexions fluidiques et/ou dans laquelle la deuxième paroi est disposée dans l'empilement de sorte que chaque portion soit reliée fluidiquement au même nombre de compartiments cathodiques par des connexions fluidiques.

3. Pile à combustible selon la revendication 1 ou 2, dans laquelle le premier film (24) et/ou le deuxième film a ou ont une épaisseur comprise entre quelques micromètres et quelques dizaines de micromètres.

4. Pile à combustible selon la revendication 1, 2 ou 3, dans laquelle le premier film (24) et/ou le deuxième film comporte un matériau choisi parmi le polyéthylène naphtalate (PEN), le polyéthylène téréphtalate (PET) et le polyimide.

5. Pile à combustible selon l'une des revendications 1 à 4, dans laquelle le premier film (24) est inséré entre un joint (14) et une cellule élémentaire (C) et en contact avec ledit joint (14) et la cellule élémentaire (C), et/ou le deuxième film est inséré entre un joint et une cellule élémentaire et en contact avec ledit joint et la cellule élémentaire.

6. Pile à combustible selon la revendication 1 ou 2, dans laquelle ladite cellule élémentaire comporte un électrolyte sous forme de membrane et dans laquelle la partie périphérique est formée par une partie périphérique de la membrane.

7. Pile à combustible selon la revendication 6 dans laquelle la partie périphérique de la membrane est recouverte sur au moins une de ses faces par un troisième film.

8. Pile à combustible selon la revendication 1 ou 2, dans laquelle ladite cellule élémentaire comporte un électrolyte entre l'anode et la cathode et une partie périphérique rapportée sur l'électrolyte, ladite partie périphérique étant formée par au moins un quatrième film.

9. Pile à combustible selon la revendication 7 ou 8, dans laquelle le troisième film ou le quatrième film comporte un matériau choisi parmi le polyéthylène naphtalate (PEN), le polyéthylène téréphtalate (PET) et le polyimide.

10. Pile à combustible selon l'une des revendications 1 à 9, dans laquelle les plaques bipolaires (2) comportent deux plaques (2.1, 2.2) superposées et dans laquelle les connexions fluidiques entre les collecteurs et les compartiments anodiques et cathodiques sont réalisées au moins en partie entre lesdites plaques (2.1, 2.2).

11. Pile à combustible selon l'une des revendications 1 à 10, comportant des premiers moyens de renfort de la première paroi afin qu'elle résiste à une différence de pression entre les deux portions (P1, P2) du premier collecteur d'alimentation (10) et/ou des deuxièmes moyens de renfort de la deuxième paroi afin qu'elle résiste à une différence de pression entre les deux portions du deuxième collecteur.

12. Pile à combustible selon la revendication précédente, dans laquelle les premiers moyens de renfort comportent une plaquette (26) disposée dans l'une des portions (P1) du premier collecteur d'alimentation (10) et une plaquette (26) disposée dans l'autre portion (P2) du premier collecteur d'alimentation (10), chaque plaquette (26) étant disposée entre une face de la première paroi et la plaque bipolaire (2) la plus proche à proximité de la première paroi, et/ou les deuxièmes moyens de renfort comportent une plaquette disposée dans l'une des portions du deuxième collecteur et une plaquette disposée dans l'autre portion du deuxième collecteur, chaque plaquette (26) étant disposée entre une face de la deuxième paroi et la plaque bipolaire la plus proche à proximité de la deuxième paroi.

13. Pile à combustible selon la revendication précédente, dans laquelle lesdites plaquettes (26) sont fixées à la plaque bipolaire (2) ou à la face de la paroi.

14. Pile à combustible selon la revendication 12 ou 13, dans laquelle lesdites plaquettes (26) sont fabriquées à partir d'un feuillard métallique.

15. Pile à combustible selon l'une des revendications 1 à 14, dans laquelle la source en un premier réactif est une source d'hydrogène (SH) et le deuxième collecteur est connecté à une source d'air.

16. Pile à combustible selon l'une des revendications précédentes, dans laquelle lesdits moyens de commande sont configurés pour, dans une phase alimenter alternativement chacune des portions du premier collecteur et/ou du deuxième collecteur et maintenir fermé le collecteur de sortie, et dans une autre phase alimenter les deux portions du premier collecteur simultanément et/ou du deuxième collecteur simultanément et d'ouvrir le collecteur de sortie.

17. Procédé de fabrication d'une pile à combustible à n + m cellules élémentaires selon l'une des revendications 1 à 5 comportant :
- fabrication des n + m + 1 plaques bipolaires (2),
- fabrication des n + m cellules élémentaires (C),
- empilement des plaques bipolaires (2) et des cellules élémentaires(C) en alternant les plaques bipolaires (2) et les cellules élémentaires(C) et en interposant des joints entre une plaque bipolaire (2) et une cellule élémentaire (4), de sorte à délimiter les compartiments cathodiques et anodiques, le premier collecteur, le deuxième collecteur et le au moins un collecteur d'évacuation,
- mise en place d'un premier film (24) entre un joint et une cellule élémentaire (C) sur une fenêtre du premier collecteur d'alimentation (10) et/ou d'un deuxième film entre un joint et une cellule élémentaire sur une fenêtre du deuxième collecteur d'alimentation au cours de l'empilement, de sorte qu'à la fin de l'empilement le premier collecteur d'alimentation (10) et/ou le deuxième collecteur d'alimentation soient séparés en deux portions (P1, P2), l'une des portions étant raccordée fluidiquement à n compartiments et l'autre portion étant raccordée fluidiquement à m compartiments.

18. Procédé de fabrication d'une pile à combustible à n + m cellules élémentaires selon l'une des revendications 6 à 9 comportant :
- fabrication des n + m + 1 plaques bipolaires (2),
- fabrication des n + m cellules élémentaires (C), ladite comprenant la réalisation d'ouvertures dans une partie périphérique des cellules élémentaires pour délimiter le premier collecteur d'alimentation (10), le deuxième collecteur et le au moins un collecteur d'évacuation, une cellule parmi les n + m ne comportant pas d'ouverture pour le premier collecteur d'alimentation et/ou deuxième collecteur d'alimentation,
- empilement des plaques bipolaires (2) et des cellules élémentaires(C) en alternant les plaques bipolaires (2) et les cellules élémentaires(C) et en interposant des joints entre une plaque bipolaire (2) et une cellule élémentaire (4), de sorte à délimiter les compartiments cathodiques et anodiques, le premier collecteur, le deuxième collecteur et le au moins un collecteur d'évacuation, ladite cellule ne comportant pas d'ouverture pour le premier collecteur d'alimentation et/ou le deuxième collecteur d'alimentation étant disposé dans l'empilement, de sorte qu'à la fin de l'empilement le premier collecteur d'alimentation (10) et/ou le deuxième collecteur d'alimentation soient séparés en deux portions (P1, P2), l'une des portions étant raccordée fluidiquement à n compartiments et l'autre portion étant raccordée fluidiquement à m compartiments.

19. Procédé de fabrication selon a revendication 17 ou 18, dans lequel n est égal à m.

20. Procédé de fabrication selon l'une des revendications 17 à 19, dans laquelle juste avant la mise en place de la première paroi et/ou juste après la mise en place de la première paroi des moyens de renforts sont mis en place dans l'empilement et/ou dans laquelle juste avant la mise en place de la deuxième paroi et/ou juste après la mise en place de la deuxième paroi des moyens de renforts sont mis en place dans l'empilement.

## Patentansprüche

1. Brennstoffzelle, einen Stapel von Elementarzellen (C) beinhaltend, die durch bipolare Platten (2) getrennt sind, wobei jede Elementarzelle (C) eine Anode (4), eine Kathode (6) und einen Elektrolyten (8) zwischen der Anode (4) und der Kathode (6) beinhaltet, und mit einer bipolaren Platte (2) auf der Seite der Anode (4) einen Anodenraum definierend, und auf der Seite der Kathode (6) einen Kathodenraum, einen ersten Versorgungskollektor (10) der Anodenräume in einem ersten Reaktanten, einen zweiten Versorgungskollektor der Kathodenräume in einem zweiten Reaktanten, und mindestens einen Evakuierungskollektor (12) der Nebenprodukte der Reaktion, wobei der erste Versorgungskollektor (10) zwei Enden (10.1, 10.2) beinhaltet, die konfiguriert sind, um mit einer Quelle des ersten Reaktanten verbunden zu werden, wobei der erste Versorgungskollektor (10) durch eine erste zum ersten Reaktanten abgedichtete Wand in zwei Abschnitte (P1, P2) unterteilt ist, wobei jeder Abschnitt (P1, P2) durch Fluidverbindungen fluidisch an die Anodenräume angebunden ist, wobei die erste Wand eine erste Folie (24) beinhaltet, die zwischen einer Zelle (C) und einer bipolaren Platte (2) eingefügt ist oder durch einen peripheren Teil einer Elementarzelle gebildet ist, und/oder wobei der zweite Versorgungskollektor zwei Enden beinhaltet, die konfiguriert sind, um mit einer Quelle des zweiten Reaktanten verbunden zu werden, wobei der zweite Versorgungskollektor durch eine zum zweiten Reaktanten abgedichtete Wand in zwei Abschnitte unterteilt ist, wobei jeder Abschnitt durch Fluidverbindungen fluidisch an die Kathodenräume angebunden ist, wobei die zweite Wand eine zweite Folie beinhaltet, die zwischen einer Zelle (C) und einer bipolaren Platte (2) eingefügt ist oder durch einen peripheren Teil einer Elementarzelle gebildet ist, und wobei die Zelle Steuermittel beinhaltet, die konfiguriert sind, um die Versorgung des ersten und zweiten Endes des ersten und/oder zweiten Versorgungskollektors getrennt zu steuern.

2. Brennstoffzelle nach Anspruch 1, wobei die erste Wand im Stapel so angeordnet ist, dass jeder Abschnitt (P1, P2) durch Fluidverbindungen fluidisch an die gleiche Anzahl von Anodenräumen angebunden ist, und/oder wobei die zweite Wand im Stapel so angeordnet ist, dass jeder Abschnitt durch Fluidverbindungen fluidisch an die gleiche Anzahl von Kathodenräumen angebunden ist.

3. Brennstoffzelle nach Anspruch 1 oder 2, wobei die erste Folie (24) und/oder die zweite Folie eine Dicke zwischen einigen Mikrometern und einigen Zehner Mikrometern hat.

4. Brennstoffzelle nach Anspruch 1, 2 oder 3, wobei die erste Folie (24) und/oder die zweite Folie ein Material beinhaltet, das ausgewählt ist aus Polyethylennaphthalat (PEN), Polyethylenterephthalat (PET) und Polyimid.

5. Brennstoffzelle nach einem der Ansprüche 1 bis 4, wobei die erste Folie (24) zwischen einer Dichtung (14) und einer Elementarzelle (C) eingefügt ist und mit der Dichtung (14) und der Elementarzelle (C) in Kontakt steht, und/oder die zweite Folie zwischen einer Dichtung und einer Elementarzelle eingefügt ist und mit der Dichtung und der Elementarzelle in Kontakt steht.

6. Brennstoffzelle nach Anspruch 1 oder 2, wobei die Elementarzelle einen Elektrolyten in der Form einer Membran beinhaltet und wobei der periphere Teil durch einen peripheren Teil der Membran gebildet ist.

7. Brennstoffzelle nach Anspruch 6, wobei der periphere Teil der Membran auf mindestens einer seiner Flächen von einer dritten Folie bedeckt ist.

8. Brennstoffzelle nach Anspruch 1 oder 2, wobei die Elementarzelle einen Elektrolyten zwischen der Anode und der Kathode beinhaltet und einen peripheren Teil, der auf dem Elektrolyten angebracht ist, wobei der periphere Teil durch mindestens eine vierte Folie gebildet ist.

9. Brennstoffzelle nach Anspruch 7 oder 8, wobei die dritte Folie oder die vierte Folie ein Material beinhaltet, das ausgewählt ist aus Polyethylennaphthalat (PEN), Polyethylenterephthalat (PET) und Polyimid.

10. Brennstoffzelle nach einem der Ansprüche 1 bis 9, wobei die bipolaren Platten (2) zwei übereinanderliegende Platten (2.1, 2.2) beinhalten und wobei die Fluidverbindungen zwischen den Kollektoren und den Anoden- und Kathodenräumen mindestens teilweise zwischen den Platten (2.1, 2.2) erstellt sind.

11. Brennstoffzelle nach einem der Ansprüche 1 bis 10, erste Mittel zur Verstärkung der ersten Wand beinhaltend, damit sie einer Druckdifferenz zwischen den zwei Abschnitten (P1, P2) des ersten Versorgungskollektors (10) widersteht, und/oder zweite Mitteln zur Verstärkung der zweiten Wand, damit sie einer Druckdifferenz zwischen den zwei Abschnitten des zweiten Kollektors widersteht.

12. Brennstoffzelle nach dem vorhergehenden Anspruch, wobei die ersten Verstärkungsmittel eine Scheibe (26) beinhalten, die in einem der Abschnitte (P1) des ersten Versorgungskollektors (10) angeordnet ist, und eine Scheibe (26), die im anderen Abschnitt (P2) des ersten Versorgungskollektors (10) angeordnet ist, wobei jede Scheibe (26) zwischen einer Fläche der ersten Wand und der nächstgelegenen bipolaren Platte (2) in der Nähe der ersten Wand angeordnet ist, und/oder die zweiten Verstärkungsmittel eine Scheibe beinhalten, die in einem der Abschnitte des zweiten Kollektors angeordnet ist, und eine Scheibe, die im anderen Abschnitt des zweiten Kollektors angeordnet ist, wobei jede Scheibe (26) zwischen einer Fläche der zweiten Wand und der nächstgelegenen bipolaren Platte in der Nähe der zweiten Wand angeordnet ist.

13. Brennstoffzelle nach dem vorhergehenden Anspruch, wobei die Scheiben (26) an der bipolaren Platte (2) oder an der Fläche der Wand befestigt sind.

14. Brennstoffzelle nach Anspruch 12 oder 13, wobei die Scheiben (26) aus einem Metallband hergestellt sind.

15. Brennstoffzelle nach einem der Ansprüche 1 bis 14, wobei die Quelle eines ersten Reaktanten eine Wasserstoffquelle (SH) ist und der zweite Kollektor mit einer Luftquelle verbunden ist.

16. Brennstoffzelle nach einem der vorhergehenden Ansprüche, wobei die Steuermittel konfiguriert sind, um in einer Phase abwechselnd jeden der Abschnitte des ersten Kollektors und/oder des zweiten Kollektors zu versorgen und den Ausgangskollektor geschlossen zu halten, und in einer anderen Phase die zwei Abschnitte des ersten Kollektors gleichzeitig und/oder des zweiten Kollektors gleichzeitig zu versorgen und den Ausgangskollektor zu öffnen.

17. Verfahren zur Herstellung einer Brennstoffzelle mit n + m Elementarzellen nach einem der Ansprüche 1 bis 5, beinhaltend:
- Herstellung der n + m + 1 bipolaren Platten (2),
- Herstellung der n + m Elementarzellen (C),
- Stapeln der bipolaren Platten (2) und der Elementarzellen (C) durch Abwechseln der bipolaren Platten (2) und der Elementarzellen (C) und durch Zwischenlegen von Dichtungen zwischen einer bipolaren Platte (2) und einer Elementarzelle (4), so dass die Kathoden- und Anodenräume, der erste Kollektor, der zweite Kollektor und der mindestens eine Evakuierungskollektor abgegrenzt sind,
- Anbringen einer ersten Folie (24) zwischen einer Dichtung und einer Elementarzelle (C) auf einem Fenster des ersten Versorgungskollektors (10), und/oder einer zweiten Folie zwischen einer Dichtung und einer Elementarzelle auf einem Fenster des zweiten Versorgungskollektors während des Stapelns, so dass am Ende des Stapelns der erste Versorgungskollektor (10) und/oder der zweite Versorgungskollektor in zwei Abschnitte (P1, P2) getrennt sind, wobei einer der Abschnitte fluidisch an n Räume angeschlossen ist und der andere Abschnitt fluidisch an m Räume angeschlossen ist.

18. Verfahren zur Herstellung einer Brennstoffzelle mit n + m Elementarzellen nach einem der Ansprüche 6 bis 9, beinhaltend:
- Herstellung der n + m + 1 bipolaren Platten (2),
- Herstellung der n + m Elementarzellen (C), wobei dies die Erstellung von Öffnungen in einem peripheren Teil der Elementarzellen umfasst, um den ersten Versorgungskollektor (10), den zweiten Kollektor und den mindestens einen Evakuierungskollektor abzugrenzen, wobei eine Zelle unter den n + m keine Öffnung für den ersten Versorgungskollektor und/oder den zweiten Versorgungskollektor beinhaltet,
- Stapeln der bipolaren Platten (2) und der Elementarzellen (C) durch Abwechseln der bipolaren Platten (2) und der Elementarzellen (C) und durch Zwischenlegen von Dichtungen zwischen einer bipolaren Platte (2) und einer Elementarzelle (4), so dass die Kathoden- und Anodenräume, der erste Kollektor, der zweite Kollektor und der mindestens eine Evakuierungskollektor abgegrenzt sind, wobei die Zelle keine Öffnung für den ersten Versorgungskollektor beinhaltet und/oder der zweite Versorgungskollektor im Stapel angeordnet ist, so dass am Ende des Stapelns der erste Versorgungskollektor (10) und/oder der zweite Versorgungskollektor in zwei Abschnitte (P1, P2) getrennt sind, wobei einer der Abschnitte fluidisch an n Räume angeschlossen ist und der andere Abschnitt fluidisch an m Räume angeschlossen ist.

19. Herstellungsverfahren nach Anspruch 17 oder 18, wobei n gleich m ist.

20. Herstellungsverfahren nach einem der Ansprüche 17 bis 19, wobei unmittelbar vor dem Anbringen der ersten Wand und/oder unmittelbar nach dem Anbringen der ersten Wand Verstärkungsmittel im Stapel angebracht werden, und/oder wobei unmittelbar vor dem Anbringen der zweiten Wand und/oder unmittelbar nach dem Anbringen der zweiten Wand Verstärkungsmittel im Stapel angebracht werden.

## Claims

1. Fuel cell including a stack of elementary cells (C) separated by bipolar plates (2), each elementary cell (C) including an anode (4), a cathode (6) and an electrolyte (8) between the anode (4) and the cathode (6), and defining with a bipolar plate (2) on the anode (4) side an anode compartment and on the cathode (6) side a cathode compartment, a first manifold (10) for supplying the anode compartments with a first reactant, a second manifold for supplying the cathode compartments with a second reactant, and at least one manifold (12) for evacuating the reaction by-products, wherein said first supply manifold (10) includes two ends (10.1, 10.2) configured to be connected to a source of the first reactant, wherein said first supply manifold (10) is divided into two portions (P1, P2) by a first wall impermeable to the first reactant, each portion (P1, P2) being fluidly connected to anode compartments by fluid connections, said first wall including a first film (24) inserted between a cell (C) and a bipolar plate (2) or being formed by a peripheral part of an elementary cell, and/or wherein the second supply manifold includes two ends configured to be connected to a source of the second reactant, wherein said second supply manifold is divided into two portions by a wall impermeable to the second reactant, each portion being fluidly connected to cathode compartments by fluid connections, said second wall including a second film inserted between a cell (C) and a bipolar plate (2) or being formed by a peripheral part of an elementary cell, and wherein said fuel cell includes control means configured to separately control the supply of the first and second ends of the first and/or second supply manifold.

2. Fuel cell according to claim 1, wherein the first wall is disposed in the stack so that each portion (P1, P2) is fluidly connected to the same number of anode compartments by fluid connections and/or wherein the second wall is disposed in the stack so that each portion is fluidly connected to the same number of cathode compartments by fluid connections.

3. Fuel cell according to claim 1 or 2, wherein the first film (24) and/or the second film has or have a thickness between several micrometres and several tens of micrometres.

4. Fuel cell according to claim 1, 2 or 3, wherein the first film (24) and/or the second film includes a material chosen from polyethylene naphthalate (PEN), polyethylene terephthalate (PET) and polyimide.

5. Fuel cell according to one of claims 1 to 4, wherein the first film (24) is inserted between a joint (14) and an elementary cell (C) and in contact with said joint (14) and the elementary cell (C), and/or the second film is inserted between a joint and an elementary cell and in contact with said joint and the elementary cell.

6. Fuel cell according to claim 1 or 2, wherein said elementary cell includes an electrolyte in the form of a membrane and wherein the peripheral part is formed by a peripheral part of the membrane.

7. Fuel cell according to claim 6, wherein the peripheral part of the membrane is covered on at least one of its faces by a third film.

8. Fuel cell according to claim 1 or 2, wherein said elementary cell includes an electrolyte between the anode and the cathode and a peripheral part added onto the electrolyte, said peripheral part being formed by at least one fourth film.

9. Fuel cell according to claim 7 or 8, wherein the third film or the fourth film includes a material chosen from polyethylene naphthalate (PEN), polyethylene terephthalate (PET) and polyimide.

10. Fuel cell according to one of claims 1 to 9, wherein the bipolar plates (2) include two superimposed plates (2.1, 2.2) and wherein the fluid connections between the manifolds and the anode and cathode compartments are made at least partly between said plates (2.1, 2.2).

11. Fuel cell according to one of claims 1 to 10, including first means for reinforcing the first wall in order for it to resist a difference in pressure between the two portions (P1, P2) of the first supply manifold (10) and/or second means for reinforcing the second wall in order for it to resist a difference in pressure between the two portions of the second manifold.

12. Fuel cell according to the preceding claim, wherein the first reinforcement means include a strip (26) disposed in one of the portions (P1) of the first supply manifold (10) and a strip (26) disposed in the other portion (P2) of the first supply manifold (10), each strip (26) being disposed between a face of the first wall and the closest bipolar plate (2) near the first wall, and/or the second reinforcement means include a strip disposed in one of the portions of the second manifold and a strip disposed in the other portion of the second manifold, each strip (26) being disposed between a face of the second wall and the closest bipolar plate near the second wall.

13. Fuel cell according to the preceding claim, wherein said strips (26) are fastened to the bipolar plate (2) or to the face of the wall.

14. Fuel cell according to claim 12 or 13, wherein said strips (26) are manufactured from a metal strap.

15. Fuel cell according to one of claims 1 to 14, wherein the source of a first reactant is a source of hydrogen (SH) and the second manifold is connected to a source of air.

16. Fuel cell according to one of the preceding claims, wherein said control means are configured to in one phase alternatingly supply each of the portions of the first manifold and/or of the second manifold and maintain closed the output manifold, and in another phase supply both portions of the first manifold simultaneously and/or of the second manifold simultaneously and open the output manifold.

17. Method for manufacturing a fuel cell with n + m elementary cells according to one of claims 1 to 5 including:
- manufacturing the n + m + 1 bipolar plates (2),
- manufacturing the n + m elementary cells (C),
- stacking the bipolar plates (2) and the elementary cells (C) by alternating the bipolar plates (2) and the elementary cells (C) and by interposing joints between a bipolar plate (2) and an elementary cell (4), so as to define the cathode and anode compartments, the first manifold, the second manifold and the at least one evacuation manifold,
- putting in place a first film (24) between a joint and an elementary cell (C) on a window of the first supply manifold (10) and/or a second film between a joint and an elementary cell on a window of the second supply manifold during the stacking, so that at the end of the stacking the first supply manifold (10) and/or the second supply manifold are separated into two portions (P1, P2), one of the portions being fluidly connected to n compartments and the other portion being fluidly connected to m compartments.

18. Method for manufacturing a fuel cell with n + m elementary cells according to one of claims 6 to 9 including:
- manufacturing the n + m + 1 bipolar plates (2),
- manufacturing the n + m elementary cells (C), said comprising the creation of openings in a peripheral part of the elementary cells to define the first supply manifold (10), the second manifold and the at least one evacuation manifold, one cell out of the n + m not including an opening for the first supply manifold and/or second supply manifold,
- stacking the bipolar plates (2) and the elementary cells (C) by alternating the bipolar plates (2) and the elementary cells (C) and by interposing joints between a bipolar plate (2) and an elementary cell (4), so as to define the cathode and anode compartments, the first manifold, the second manifold and the at least one evacuation manifold, said cell not including an opening for the first supply manifold and/or the second supply manifold being disposed in the stack, so that at the end of the stacking the first supply manifold (10) and/or the second supply manifold are separated into two portions (P1, P2), one of the portions being fluidly connected to n compartments and the other portion being fluidly connected to m compartments.

19. Manufacturing method according to claim 17 or 18, wherein n is equal to m.

20. Manufacturing method according to one of claims 17 to 19, wherein just before the putting in place of the first wall and/or just after the putting in place of the first wall reinforcement means are put in place in the stack and/or wherein just before the putting in place of the second wall and/or just after the putting in place of the second wall reinforcement means are put in place in the stack.
